# EUROPEAN PATENT APPLICATION

(11) **EP 1 512 894 A1**
(43) Date of publication of application: **09.03.2005**
(21) Application number: 04104309.2
(22) Date of filing: 07.09.2004
(51) Int. Cl.: F16K 31/06

(54) **Valve with waterproof solenoid**

(30) Priority: 08.09.2003 DE 10341669
(71) Applicant: Bosch Rexroth Teknik AB, 125 81 Stockholm (SE)
(72) Inventor: Reimer, Jens, 18751, Täby (SE); Gyldner, Jan, 13530, Tyresö (SE)
(74) Representative: Kietzmann, Lutz

(57) **Abstract**

Solenoid valve, comprising an electric coil (10) for moving an integrated plunger and a housing (30) which surrounds said coil (10), wherein the coil (10) is totally encapsulated in the housing (30).

## Description

The invention relates to a waterproof solenoid valve.

In the field of waterproof valves involving electric and electromagnetic components, it has been a growing problem that these components usually must be kept from exposure to water to avoid malfunction and/or destruction of the valve. This goes especially for the coil of an electromagnetic valve.

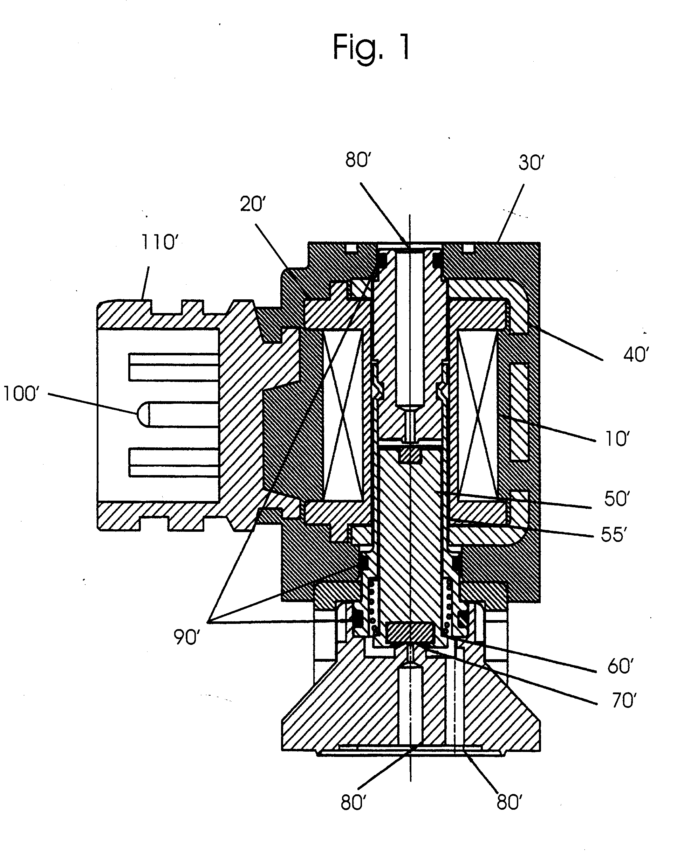

A prior art valve employing the standard technique of sealing the coil is shown in Fig. 1. The coil 10' is wound up on a bobbin or a reel 20', which is, together with a yoke 40' fitted into a housing 30'. Further components are a plunger 50', together with a plunger support (core tube) 55', a valve seat 60' and an orifice 70', which together form the valve seat. The valve has three different ports 80' for in- and outlet of a fluid. The coil 10' is connected with an electric plug 100', thus receiving electric signals controlling the valve. The plug 100' is placed in a plug housing 110'. To keep water from entering the inner parts of the valve and to reach the coil, three sealings in form of O-rings 90' are provided.

However, in case that the sealings have been omitted due to malproduction or are out of function due to aging, there is a chance for water to enter the inner room of the valve. Although the coil 10' is still surrounded by the reel 20' (which is usually made out of plastic), the water may enter a gap between the reel 20' and the housing 30', either due to a bad fitting between those components or formed due to capillary forces, and penetrate to the coil 10' thereby causing malfunction and/or destruction of the valve.

There is therefore a need to provide a waterproof valve, in which the coil and/or other components are kept from being exposed to water.

This problem is solved by providing a valve according to claim 1 and a method according to claim 11. According to claim 1 the valve comprises a coil and a housing and is characterized in that the coil is totally encapsulated in the housing.

Encapsulation in the sense of the present invention means in particular that the coil and optionally other accompanying components are completely surrounded by the housing.

By this solution, there is no need for sealing devices such as O-rings anymore, therefore providing a more compact design. Since during the production of prior art valves it was almost impossible to monitor, whether an O-ring was inserted or not, an omittance of an O-ring due to malproduction remained normally undiscovered, thus ending in the shipping of a inadmissible valve. These problems can be avoided using a valve according to the present invention.

Since the housing totally encapsulates the coil, there is a lesser demand of an exact fitting of the components surrounding the coil, thus leading to decreased tolerance demands. Furthermore, the valve can be assembled with fewer parts, thus increasing the production efficiency and reducing the assembling time. Since no O-rings, which are subject to ageing, are present any more, also the handling of spare parts is greatly improved.

Preferably the housing is formed by molding and the coil is encapsulated in the housing during the molding of the housing. By this way, the complete encapsulation of the coil can be achieved easily and totally.

In an embodiment of the present invention, the coil is wound up on a reel. In this case it is preferred, that the reel is encapsulated in the housing, too.

In a further embodiment, the valve comprises a yoke. This yoke can either be encapsulated in the housing, too, in the alternative it can be placed outside the housing. In this case, it is preferred that the yoke covers the housing at least partly, thus serving as a mechanical cover. The yoke can also have means to fix the valve to a chosen interface.

In a further embodiment, the valve comprises a valve seat incorporated in the housing. This allows a more compact design and reduces the number of components of the valve.

In another embodiment, the housing comprises a tube-formed recess, which is adapted to support the plunger of the valve. In such an embodiment, the core tube for the plunger may be omitted, since the housing itself provides the core tube.

In another embodiment, the housing furthermore comprises at least one orifice incorporated therein. This embodiment is especially preferred in case the housing incorporates the valve seat, too.

In yet another embodiment, the valve furthermore comprises a connection system connecting the coil at least with a plug, the connection system being encapsulated in the housing. In this case, the plug can be mounted to the housing directly, avoiding the need to provide for a plug housing as a separate component, and is preferably mounted to the housing in the same step as the encapsulation of the coil. The electrical connections from the plug to the coil are encapsulated inside the housing too, thereby being protected from exposure to water.

In a method according to the present invention for the formation of a valve comprising a coil and a housing, the housing being formed by molding, the coil is encapsulated in the housing while the housing is molded. Preferably, the plug and the electrical connections between the coil and the plug are mounted on and/or encapsulated in the housing during the encapsulation of the coil in the housing. This way, a reliably waterproof valve having a compact design and a reduced number of component as compared to valves of standard technique is provided.

Further features and advantages of the present invention will become apparent out of the description of the accompanying figures, in which
Fig. 1 shows a cross-sectional schematic view of a prior art valve (discussed above)
Fig. 2 shows a cross-sectional schematic view of a valve according to a first embodiment of the present invention,
Fig. 3 shows a cross-sectional schematic view of a valve according to a second embodiment of the present invention; and
Fig. 4 shows a cross-sectional schematic view of a valve according to a third embodiment of the present invention.

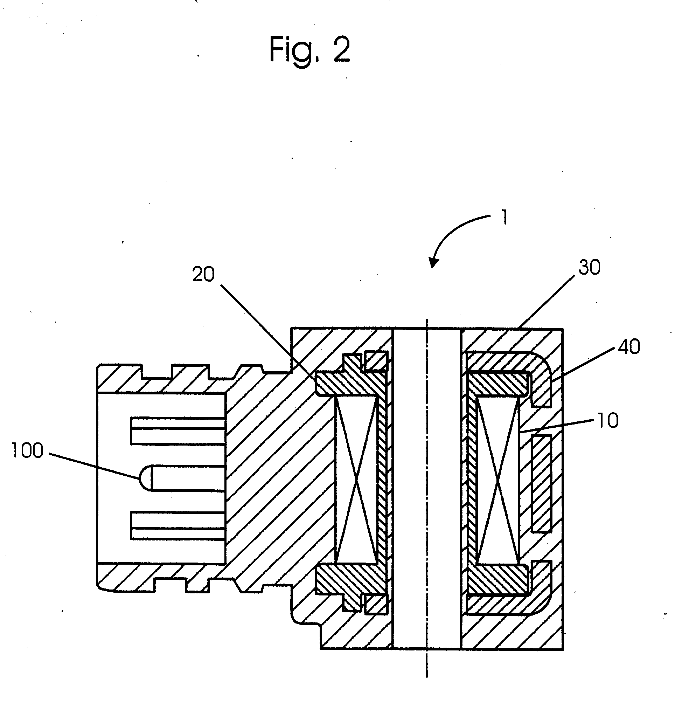

Figs. 2 to 4 show cross sectional schematic views of a valve 1 according to three different embodiments of the present invention. For better reading of the drawings, not all required components for the valve 1 are shown. In all embodiments, the coil 10 is totally encapsulated in the housing 30, thus preventing the coil to be penetrated by water or other fluids. The coil 10 is wound up on a reel 20; however, this component is optional and can be omitted. Coil 10 and reel 20 are of standard technique and are not described in detail, however any standard techniques can be used within the present invention, this goes for all further components not described in detail as well. The housing 30 can be of any material used in the field. Preferably the housing 30 consists of a plastic material that can be formed by molding. The molding procedure itself can consist of either one or several steps. The housing 30 can also be integrated with means (not shown in the figs.) for assembling the solenoid housing together with a valve house and/or a machine.

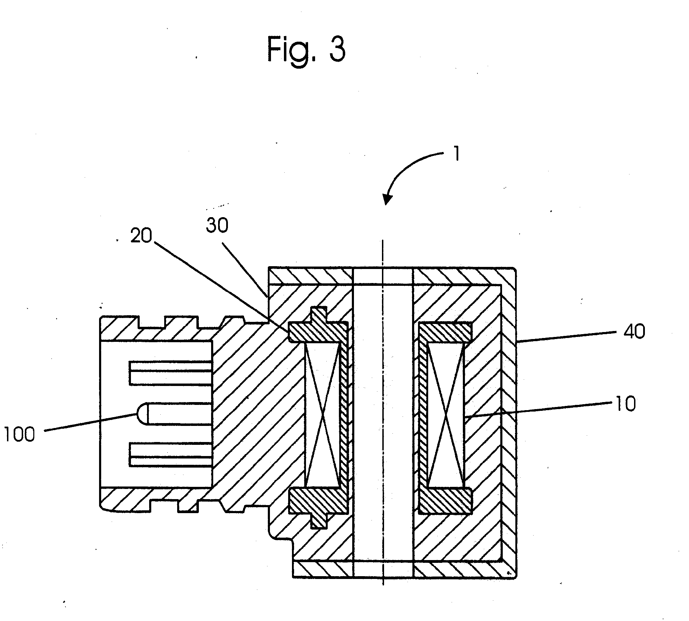

In Figs. 2 through 4, the valve 1 furthermore comprises a yoke 40. The yoke 40 can be of any given design and is of standard technique. In a first embodiment, as shown in Fig. 2, the yoke 40 is encapsulated in the housing 30, too. However, the yoke 40 can be placed outside the housing as well, as shown in a second embodiment of the invention in Fig. 3. In case the yoke 40 is placed outside the housing 30, it is preferred that the yoke covers the housing 30 at least partly or totally, thus providing for extra mechanical cover. The yoke can also have means to fix the valve to a chosen interface (not shown in the figs).

As can be seen in Fig. 2 through Fig.4, the housing 30 comprises a recess in form of a tube. This recess is preferably adapted to support the plunger of the valve (not shown in the figs.).

Thus the core tube of the plunger can be omitted, since the plunger is supported by the recess, thereby being surrounded by a component with a uniform material composition. In case the yoke 40 surrounds the housing 30, as shown in Fig. 3, it is preferred that the yoke 40 then comprises an appropriate recess, too.

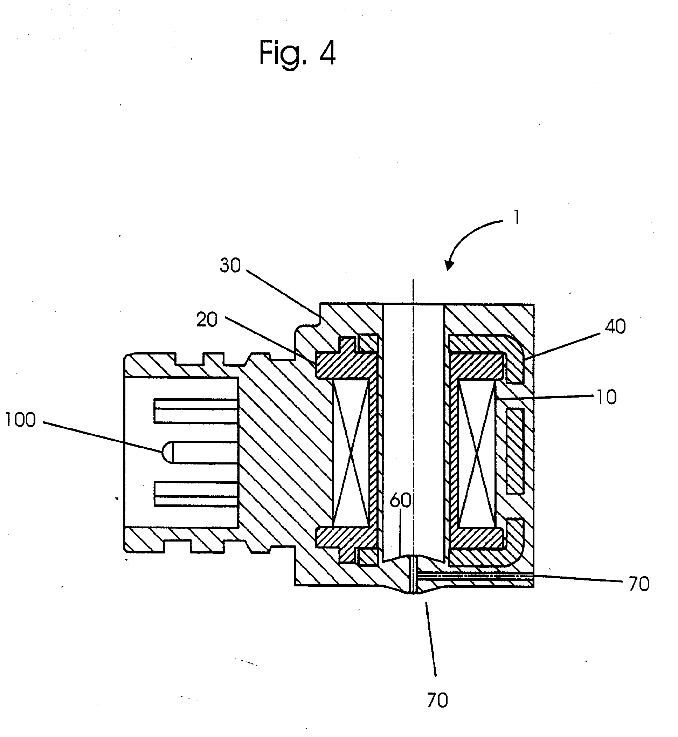

Fig. 4 shows a third embodiment of the present invention, in which the housing furthermore comprises a valve seat 60. The valve seat 60 is in accordance with the usual practice formed as a kind of volcano seat, thereby providing a tight closing of the valve in its closed state. Leading away from the valve seat 60, several orifices 70 are provided, causing the fluid to flow in any given direction.

In case the housing 30 can be formed by molding, it is preferred that the coil 10 and the components accompanying the coil 10 are encapsulated in the housing 30 during the molding procedure. This ensures a tight and waterproof encapsulation of the coil 10. In case the coil 10 is encapsulated in the housing 30 during the molding, it is preferred that the connection system to and from the coil 10 to the plug 100 and optionally other electrical and electromagnetical components (not shown in the figs) is/are encapsulated in the housing 30, too. Thereby, the plug housing can be provided in the step of forming the housing and does not need to be a separate component any more, thereby furthermore reducing the number of required components. Furthermore it is ensured, that the electrical connections leading to and from the coil are not exposed to water, too.

## Claims

1. Solenoid valve, comprising an electric coil (10) for moving an integrated plunger and a housing (30) which surrounds said coil (10),
**characterized in that** the coil (10) is totally encapsulated in the housing (30).

2. Solenoid valve according to claim 2,
**characterized in that** the housing (30) is formed by molding and the coil (10) is encapsulated in the housing (30) during the molding of the housing (30).

3. Solenoid valve according to claim 1 or 2,
**characterized in that** the coil (10) is wound up on a reel (20), the reel (20) also being totally encapsulated in the housing (30).

4. Solenoid valve according to any of the claims 1 to 3,
furthermore comprising a yoke (40).

5. Solenoid valve according to claim 4,
wherein the yoke (40) is totally encapsulated in the housing (30).

6. Solenoid valve according to claim 4,
wherein the yoke (40) is placed around the housing (30), partly or totally covering the housing (30).

7. Solenoid valve according to any of the claims 1 to 6,
furthermore comprising a valve seat (60) incorporated in the housing (30).

8. Solenoid valve according to any of the claims 1 to 7,
furthermore comprising at least one orifice (70) incorporated in the housing (30).

9. Solenoid valve according to any of the claims 1 to 8,
wherein the housing comprises a tube-formed recess adapted to supporting a plunger.

10. Solenoid valve according to any of the claims 1 to 9,
wherein the valve furthermore comprises a connection system connecting the coil at least with a plug (100), the connection system being encapsulated in the housing.

11. Method for the formation of a solenoid valve according to any of the claims 1 to 10 comprising a coil (10) and a housing (30),
**characterized in that** the housing (30) being formed by molding, comprising the step of encapsulating the coil (10) in the housing (30) during the molding of the housing (30).

12. Method according to claim 11,
wherein the plug (100) and the electrical connections between the coil (10) and the plug (100) are mounted on and/or encapsulated in the housing during the step of encapsulation of the coil (10) in the housing.
